# EUROPEAN PATENT SPECIFICATION

(11) **EP 3 199 875 B1**
(45) Date of publication and mention of the grant of the patent: **14.10.2020**
(21) Application number: 15843286.4
(22) Date of filing: 28.08.2015
(51) Int. Cl.: F24D 17/00, F24D 10/00, F24D 19/10

(54) **DEVICE FOR SUPPLYING HEATING WARM WATER FOR CENTRAL HEATING AND DISTRICT HEATING AND CONTROL METHOD**
VORRICHTUNG ZUR ZUFÜHRUNG VON HEIZUNGSWARMWASSER FÜR EINE ZENTRALHEIZUNG UND EINE GEBIETSHEIZUNG UND STEUERUNGSVERFAHREN
DISPOSITIF DESTINÉ À ALIMENTER DE L'EAU TIÈDE DE CHAUFFAGE POUR UN CHAUFFAGE CENTRAL ET UN CHAUFFAGE URBAIN ET PROCÉDÉ DE COMMANDE

(30) Priority: 24.09.2014 KR 20140127443
(43) Date of publication of application: 02.08.2017
(73) Proprietor: Kyungdong Navien Co., Ltd., Pyeongtaek-si, Gyeonggi-do 450-818 (KR)
(72) Inventor: HEO, Chang Heoi, Seoul 01705 (KR); PARK, Su Dae, Gwangmyeong-si Gyeonggi-do 14224 (KR)
(74) Representative: Habermann, Hruschka & Schnabel
(86) International application number: PCT/KR2015/009056
(87) International publication number: WO 2016/047930

(56) References cited:
- WO-A1-2009/119970
- DE-A1- 3 123 875
- DE-A1- 19 633 930
- KR-A- 20090 102 940
- KR-A- 20110 097 430
- KR-A- 20130 123 531
- KR-B1- 100 984 831
- KR-B1- 101 081 599

## Description

### [Technical Field]

The present disclosure relates to a device for supplying heating warm water for central heating and district heating and a control method, and more particularly, to a device for supplying heating warm water for central heating and district heating and a control method which are capable of concurrently supplying heating and warm water.

### [Background Art]

Recently, a huge apartment complex and a medium or large scale building are introduced with a central heating system or a district heating system in which a common heating facility for the entire apartment complex or the entire building is installed rather than an individual heating system and an individual hot water supply system, thereby supplying heating warm water to each household or each floor through a common pipeline network and hot water thereto through the common pipeline network after supplied water is heated to an appropriate required temperature through heat exchange between supplied warm water and the supplied water.

Such central heating and district heating systems employ heat source equipment having relatively high efficiency for a lot of needs and are maintained by a manager having professional skills so that there are advantages in which an active response may be possible against a decrease in efficiency of equipment over the years compared to the individual heating system, entire equipment capacity may be reduced by virtue of application of a concurrent usage rate, and a response action may be easy with respect to an emergency situation such as a fire by collecting thermal power and the like in one place.

A conventional pipeline structure for central heating and district heating, which is connected to each household, is configured with a four-pipeline type. That is, the conventional pipeline structure is provided with a heating water supply tube configured to supply heating water for heating from a heat source, a heating recovery tube configured to discharge heating recovery water which is the heating water undergone heat exchange in each household and then dropped in temperature, a heating water supply tube for hot water configured to supply the heating water for hot water from the heat source, and a heating recovery tube for hot water configured to discharge heating water which is undergone heat exchange between the heating water and direct water through the heating water supply tube for hot water and then is dropped in temperature, and supplies the heating water for a supply of heating and warm water to each household.

However, since such a four-pipeline type enables a concurrent usage of heating and warm water but results in a lot of costs when it is maintained and is newly installed, there is a trend in which a two-pipeline type device for supplying heating warm water, which is configured with a heating water supply tube and a heating recovery tube respectively configured to supply heating water from a heat source and recover the heating water, is recently used.

An example of such a two-pipeline type device for supplying heating warm water is disclosed in Korean Utility Model Registration No. 20-471736.

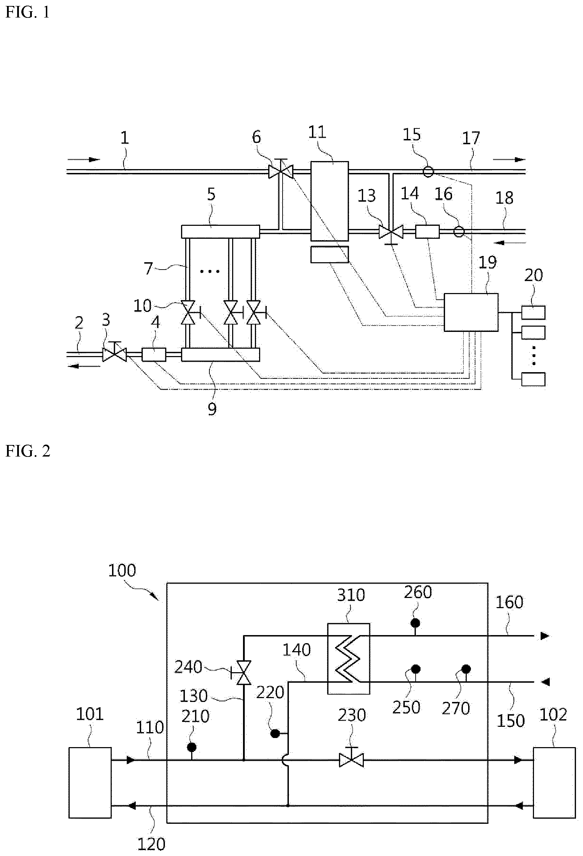

FIG. 1 is a diagram illustrating a device for supplying heating warm water disclosed in Korean Utility Model Registration No. 20-471736.

As shown in FIG. 1, a conventional device for supplying heating warm water is configured with a heat exchanger 11 provided at one side of a heating water pipeline 1 with which heating water is supplied, configured to supply warm water, and installed at each household, a three-way valve 6 provided at a line of the heating water pipeline 1 and configured to select a supply of the heating water to the heat exchanger 11, a warm water discharge pipeline 17 connected to the heat exchanger 11 and configured to discharge the warm water, a direct water pipeline 18 connected to the heat exchanger 11 at a position adjacent to the warm water discharge pipeline 17 and with which direct water is supplied inside the direct water pipeline 18, a warm water mixing valve 13 disposed at an intersecting point to which the warm water discharge pipeline 17 and the direct water pipeline 18 are connected and configured to mix the direct water with the warm water, a flow rate sensor 14 provided at a line of the direct water pipeline 18 and configured to sense a flow rate of the direct water flowing along the direct water pipeline 18, a heating water supply distributer 5 connected to the heat exchanger 11, a heating water recovery distributer 9 connected to a heating water recovery tube 2 in which the heating water is recovered and to the heating water supply distributer 5 by a plurality of connection lines 7, a warm water bypass valve 10 disposed between the heating water supply distributer 5 and the heating water recovery distributer 9 and configured to bypass the warm water, and a controller 19 configured to control operations of the three-way valve 6, the warm water mixing valve 13, and the warm water bypass valve 10 on the basis of information sensed by the flow rate sensor 14 when the warm water is used.

In accordance with such a conventional two-pipeline type device for supplying heating warm water, there is a problem in that a concurrent usage of heating and warm water is restricted. That is, since the three-way valve 6 is provided at the line of the heating water pipeline 1, the heating water supplied through the heating water pipeline 1 is supplied only in one direction with respect to the heat exchanger 11 or the heating water supply distributer 5 so that there is a problem in that heating is stopped when the warm water is used while the heating is supplied.

From DE 19633930 A1 a device for providing for the heating requirements of a living unit which is supplied by a central heating system is known. This document discloses a device according to the preamble of claim 1 and a method according to the preamble of claim 3.

From DE 3123875 A1 a consumer centre for a secondary connection of heat consumers to a regional heating centre is known.

From WO 2009/119970 A1 a boiler capable of simultaneously performing a heating operation and a hot water operation and readily controlling the temperature of the hot water is known.

The present invention is defined by the subject matter of the appended claims.

### [Technical Problem]

To address the above described problems, an object of the present disclosure is to provide a device for supplying heating warm water for central heating and district heating and a control method thereof which are capable of enabling a concurrent usage of heating and warm water.

Another object of the present disclosure is to provide a device for supplying heating warm water for central heating and district heating and a control method thereof which are capable of satisfying a temperature of warm water, which is demanded by a user, and also preventing interruption of heating by optimizing a distribution ratio of heating water between places that require heating and a hot water heat exchanger, when heating and warm water are concurrently used.

### [Technical Solution]

To attain the above described objects, a device for supplying heating warm water for central heating and district heating according to the present invention is defined in claim 1 and includes a heating water supply tube 110 configured to supply heating water, which is supplied from a heat source supply unit 101, to places 102 that require heating; a heating recovery tube 120 configured to recover heating water, which is undergone heat exchange in the places 102 that require heating, to the heat source supply unit 101; a hot water supply tube 130 branching
from the heating water supply tube 110 and configured to supply the heating water to a hot water heat exchanger 310; a hot water recovery tube 140 configured to cause heating water, which is undergone heat exchange with direct water in the hot water heat exchanger 310, to flow to the heating recovery tube 120; a direct water supply tube 150 into which the direct water flows; a warm water supply tube 160 configured to supply a user with the direct water which is supplied through the direct water supply tube 150 and then is undergone heat exchange with the heating water, which is supplied through the hot water supply tube 130, in the hot water heat exchanger 310; a heating-side flow rate adjustment valve 230 configured to adjust a flow rate of the heating water which is supplied to the places 102 that require heating through the heating water supply tube 110; a warm water-side flow rate adjustment valve 240 configured to adjust a flow rate of the heating water which is supplied to the hot water heat exchanger 310 through the hot water supply tube 130; and a controller configured to control a degree of openness of each of the heating-side flow rate adjustment valve 230 and the warm water-side flow rate adjustment valve 240 to supply the places 102 that require heating with an amount of heat to supply heating that is a remaining amount of heat obtained by subtracting an amount of heat used to supply warm water, which is used in heat exchange in the hot water heat exchanger 310, from an entire amount of supplied heat that is supplied through the heating water supply tube 110, when warm water is used while heating is supplied.

The device for supplying heating warm water according to the invention further includes a flow rate sensor 270 configured to sense a flow rate of the direct water, a direct water temperature sensor 250 configured to measure a temperature of the direct water, and a warm water temperature sensor 260 configured to measure a temperature of the warm water that is discharged through the warm water supply tube 160, wherein the controller calculates the amount of heat used to supply warm water on the basis of the flow rate of the direct water, the temperature thereof, and the temperature of the warm water.

The controller adjusts the degree of openness of the heating-side flow rate adjustment valve 230 according to a set temperature of a heating temperature adjuster, which is set by a user, while heating is supplied, and, when the warm water is used while the heating is supplied, it closes the heating-side flow rate adjustment valve 230 and at the same time opens the warm water-side flow rate adjustment valve 240 when a flow of the direct water is detected by the flow rate sensor 270, thereby adjusting the degree of openness of the warm water-side flow rate adjustment valve 240 to correspond to a set temperature of the warm water, which is set by the user, and the degree of openness of the heating-side flow rate adjustment valve 230 to enable the amount of heat to supply heating to be supplied to the places 102 that require heating.

The device for supplying heating warm water may further include a heating supply temperature sensor 210 configured to measure a temperature of the heating water that flows through the heating water supply tube 110, and a hot water-side recovery temperature sensor 220 configured to measure a temperature of the heating water that flows through the hot water recovery tube 140, wherein the controller sets a flow rate to supply hot water, which is supplied to the hot water heat exchanger 310, to a flow rate corresponding to the amount of heat used to supply warm water, and adjusts the degree of openness of the heating-side flow rate adjustment valve 230 to cause a remaining flow rate of supplied heating, which is obtained by subtracting the flow rate to supply hot water from an entire supplied flow rate corresponding to the entire amount of supplied heat, to be supplied to the places 102 that require heating, when the warm water is used while heating is supplied.

A control method of a device for supplying heating warm water for central heating and district heating according to the present invention is defined in claim 3 and includes a) supplying heating in a state of opening a heating-side flow rate adjustment valve 230 configured to adjust a flow rate of heating water that is supplied to places 102 that require heating through a heating water supply tube 110, and closing a warm water-side flow rate adjustment valve 240 configured to adjust a flow rate of heating water that is supplied to a hot water heat exchanger 310 through a hot water supply tube 130; b) determining whether a user demands warm water while the heating is supplied; c) closing the heating-side flow rate adjustment valve 230 and opening the warm water-side flow rate adjustment valve 240 when the user demands the warm water, wherein a degree of openness of the warm water-side flow rate adjustment valve 240 is adjusted to satisfy a temperature of the warm water, which is set by the user; d) calculating an amount of heat used to supply warm water, which is supplied from the hot water heat exchanger 310 to direct water, in a state in which the degree of openness of the warm water-side flow rate adjustment valve 240 is adjusted; and e) controlling a degree of openness of the heating-side flow rate adjustment valve 230 to supply the places 102 that require heating with a remaining amount of heat to supply heating, which is obtained by subtracting the amount of heat used to supply warm water from an entire amount of supplied heat that is supplied through the heating water supply tube 110.

The amount of heat used to supply warm water in Operation d) is calculated on the basis of a flow rate of the direct water, which is measured at a flow rate sensor 270, and a warm water temperature difference between a temperature of the direct water, which is measured at a direct water temperature sensor 250, and a temperature of the warm water, which is measured at a warm water temperature sensor 260.

The calculated amount of heat used to supply warm water is set to an amount of heat to supply hot water of the heating water that is supplied to the hot water heat exchanger 310 through the hot water supply tube 130, and the remaining amount of heat to supply heating in Operation e) is an amount of heat obtained by subtracting the amount of heat to supply hot water from the entire amount of supplied heat.

A flow rate to supply hot water corresponding to the amount of heat to supply hot water is calculated on the basis of a temperature of the heating water, which is measured at a heating supply temperature sensor 210 that is provided at the heating water supply tube 110, a temperature of the heating water, which is measured at a hot water-side recovery temperature sensor 220 that is provided at hot water recovery tube 140, and the amount of heat used to supply warm water, and the degree of openness of the heating-side flow rate adjustment valve 230 is adjusted to supply the places 102 that require heating with a remaining flow rate of supplied heating, which is obtained by subtracting the flow rate to supply hot water from an entire supplied flow rate corresponding to the entire amount of supplied heat.

### [Advantageous Effects]

In accordance with the present disclosure, even when warm water is used while heating is supplied, the warm water may be supplied without interruption of the heating such that convenience for a user may be improved.

Also, when heating and warm water are concurrently used, a supply amount of heating water for heating and that of heating water for hot water may be optimized such that a supply of heating may be maintained while a temperature of warm water, which is set by a user, is maintained.

### [Description of Drawings]

FIG. 1 is a diagram illustrating a device for supplying heating warm water disclosed in Korean Utility Model Registration No. 20-471736.
FIG. 2 is a configuration diagram illustrating a device for supplying heating warm water according to the present disclosure.
FIG. 3 is a flowchart illustrating a control method performed by the device for supplying heating warm water according to the present disclosure.

### ** Description of Reference Numerals **

101: heat source supply unit 102: places that require heating
110: heating water supply tube 120: heating recovery tube
130: hot water supply tube 140: hot water recovery tube
150: direct water supply tube 160: warm water supply tube
230: heating-side flow rate adjustment valve
240: warm water-side flow rate adjustment valve
250: direct water temperature sensor
260: warm water temperature sensor
270: flow rate sensor 310: hot water heat exchanger

### [Modes of the Invention]

Hereinafter, configurations and operations for preferred embodiments of the present disclosure will be described in detail with reference to the accompanying drawings.

FIG. 2 is a configuration diagram illustrating a device for supplying heating warm water according to the present disclosure.

A device 100 for supplying heating warm water of the present disclosure is configured with a heating water supply tube 110 configured to supply heating water, which is supplied from a heat source supply unit 101, to places 102 that require heating, a heating recovery tube 120 configured to recover heating water, which is undergone heat exchange in the places 102 that require heating, to the heat source supply unit 101, a hot water supply tube 130 configured to branch off from the heating water supply tube 110 and supply the heating water to a hot water heat exchanger 310, a hot water recovery tube 140 configured to cause heating water, which is undergone heat exchange with direct water in the hot water heat exchanger 310, to flow to the heating recovery tube 120, a direct water supply tube 150 into which the direct water flows, a warm water supply tube 160 configured to cause the direct water, which is supplied from the direct water supply tube 150 and then is undergone heat exchange with the heating water supplied through the hot water supply tube 130 in the hot water heat exchanger 310, to be supplied to a user, a heating-side flow rate adjustment valve 230 configured to adjust a flow rate of the heating water which is supplied to the places 102 that require heating through the heating water supply tube 110, a warm water-side flow rate adjustment valve 240 configured to adjust a flow rate of the heating water which is supplied to the hot water heat exchanger 310 through the hot water supply tube 130, and a controller (not shown) configured to control a degree of openness of each of the heating-side flow rate adjustment valve 230 and the warm water-side flow rate adjustment valve 240.

The heating water supply tube 110 is a pipeline configured to connect the heat source supply unit 101 to the places 102 that require heating, and is provided to supply heating water of a high temperature, which is supplied from the heat source supply unit 101, to the places 102 that require heating.

The places 102 that require heating may be rooms or living rooms which require heating in each household, and heating water, which is supplied to the places 102 that require heating, circulates to the heat source supply unit 101 through the heating recovery tube 120 in a state in which the heating water is undergone heat exchange and then is dropped in temperature.

The hot water heat exchanger 310 is provided to cause heat exchange between the heating water, which is supplied through the heating water supply tube 110, and direct water and then supply warm water to a user when the user demands the warm water.

The hot water supply tube 130 is configured to connect the heating water supply tube 110 to the hot water heat exchanger 310 to supply the heating water, which is supplied through the heating water supply tube 110, to the hot water heat exchanger 310.

The hot water recovery tube 140 is provided to connect the hot water heat exchanger 310 to the heating recovery tube 120, and the heating water, which is supplied to the hot water heat exchanger 310 through the hot water supply tube 130, flows to the heating recovery tube 120 through the hot water recovery tube 140 in a state in which the heating water is undergone heat exchange with the direct water in the hot water heat exchanger 310 and then is dropped in temperature.

The warm water-side flow rate adjustment valve 240 is provided at the hot water supply tube 130, and it is closed while heating is supplied to block a supply of the heating water to the hot water heat exchanger 310, and is open to supply the heating water to the hot water heat exchanger 310, when the user demands the warm water.

The heating-side flow rate adjustment valve 230 is provided at the heating water supply tube 110 and a degree of openness thereof is adjusted according to a set temperature of a heating temperature adjuster (not shown), which is set by the user, wherein the heating-side flow rate adjustment valve 230 is open while heating is supplied to enable the heating water to be supplied to the places 102 that require heating, and, when the user demands the warm water, it is closed to enable the heating water to be supplied to the hot water heat exchanger 310 or is open together with the warm water-side flow rate adjustment valve 240 to enable a concurrent usage of the heating and the warm water.

When the user demands the warm water, the direct water flows into the direct water supply tube 150, and an inflow of the direct water is sensed by a flow rate sensor 270 provided at the direct water supply tube 150 and thus the warm water is supplied.

The flow rate sensor 270 may measure a flow rate value of the direct water, may be provided therein with an impeller that rotates by a flow of the direct water, and may calculate a flow rate by sensing the number of rotations of the impeller that rotates, wherein, when the direct water flows in and then a flow rate thereof reaches a predetermined value according to the demand for the warm water by the user, the flow rate sensor 270 senses the beginning of a warm water usage by the user.

When warm water is concurrently used while heating is supplied, the flow rate sensor 270 is configured to sense a flow rate of the direct water that flows in so as to calculate an amount of heat used to supply warm water and then deliver a measured flow rate value to the controller.

The warm water supply tube 160 is provided to supply the user with warm water that is raised in temperature through heat exchange of the supplied direct water in the hot water heat exchanger 310.

A direct water temperature sensor 250 configured to measure a temperature of the direct water is provided at the direct water supply tube 150, and a warm water temperature sensor 260 configured to measure a temperature of the warm water discharged to the user is provided at the warm water supply tube 160.

As described above, the flow rate sensor 270, the direct water temperature sensor 250, and the warm water temperature sensor 260 are provided such that the controller (not shown) may calculate the amount of heat used to supply warm water. That is, the amount of heat used to supply warm water is an amount of heat with respect to heat exchange performed in the hot water heat exchanger 310, and such an amount of heat is proportional to a temperature difference between the direct water and the warm water, and a flow rate of the direct water. Therefore, the controller may calculate the amount of heat used to supply warm water on the basis of a flow rate measured at the flow rate sensor 270, a temperature of the direct water, which is measured at the direct water temperature sensor 250, and a temperature of the warm water, which is measured at the warm water temperature sensor 260.

Meanwhile, a heating supply temperature sensor 210 configured to measure a temperature of heating water supplied from the heat source supply unit 101 is provided at the heating water supply tube 110, and a hot water-side recovery temperature sensor 220 configured to measure a temperature of heating water undergone heat exchange in the hot water heat exchanger 310 is provided at the hot water recovery tube 140.

The heating supply temperature sensor 210 and the hot water-side recovery temperature sensor 220 are provided to calculate a flow rate of heating water (hereinafter, referred to as 'a flow rate to supply hot water'), which passes the hot water heat exchanger 310 when warm water is used, thereby calculating an amount of heat (hereinafter, referred to as 'an amount of heat to supply hot water') supplied to the hot water heat exchanger 310.

That is, it may be considered that the amount of heat used to supply warm water as calculated above is equal to the amount of heat to supply hot water which is supplied from the heat source supply unit 101 to the hot water heat exchanger 310. In this case, the amount of heat used to supply warm water is proportional to the flow rate to supply hot water, and a temperature difference (hereinafter, referred to as 'a heating water temperature difference') between the temperature of heating water, which is measured at the heating supply temperature sensor 210, and the temperature of heating water, which is measured at the hot water-side recovery temperature sensor 220. Also, an entire flow rate of heating water (hereinafter, referred to as 'an entire supplied flow rate') supplied from the heat source supply unit 101 to each household is set to be constant.

When the user uses warm water while heating is supplied, since a flow rate of heating water, which is supplied to each of the places 102 that require heating and the hot water heat exchanger 310, should be distributed so as to enable a concurrent usage of heating and warm water, the controller controls to adjust a degree of openness of each of the heating-side flow rate adjustment valve 230 and the warm water-side flow rate adjustment valve 240 to supply the places 102 that require heating with a remaining amount of heat (hereinafter, referred to as 'an amount of heat to supply heating') which is obtained by subtracting the amount of heat used to supply warm water (that is, the amount of heat to supply hot water) from an entire amount of heat (hereinafter, referred to as 'an entire amount of supplied heat') supplied from the heat source supply unit 101 to each household.

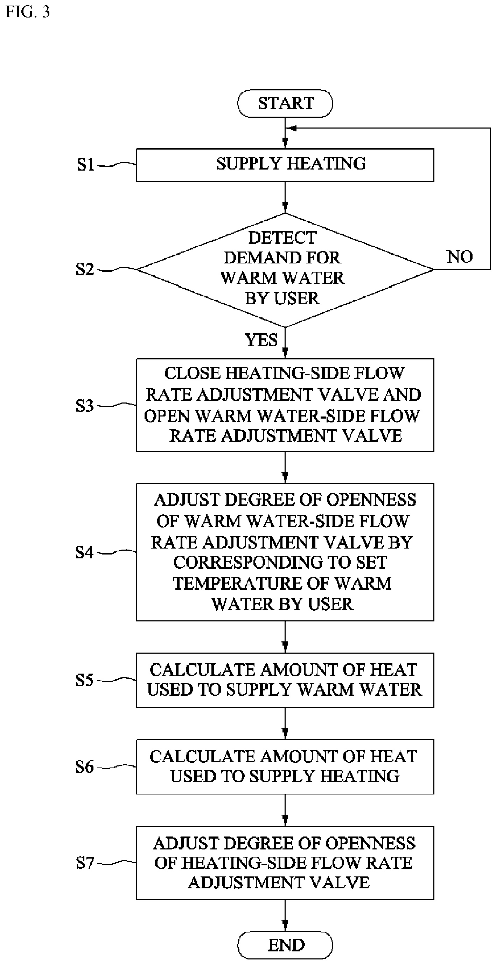

FIG. 3 is a flowchart illustrating a control method performed by the device for supplying heating warm water of the present disclosure, and hereinafter, the control method performed by the device for supplying heating warm water of the present disclosure will be described with reference to FIG. 3.

Heating is supplied (S1), and it is determined whether a user demands warm water while the heating is supplied (S2). While the heating is supplied, the heating-side flow rate adjustment valve 230 is open and the warm water-side flow rate adjustment valve 240 is closed.

With respect to whether the user demands warm water, a demand for warm water may be determined to be made when a flow rate of direct water, which is measured at the flow rate sensor 270, reaches a predetermined value.

When the demand for warm water is determined to be made by the user on the basis of the determination result, the heating-side flow rate adjustment valve 230 is closed and the warm water-side flow rate adjustment valve 240 is open so that heating water, which is supplied from the heat source supply unit 101, is supplied to the hot water heat exchanger 310 (S3) .

Heat exchange between direct water and the heating water is performed in the hot water heat exchanger 310 to change the direct water into warm water, the warm water is supplied to the user through the warm water supply tube 160, and the heating water circulates to the heat source supply unit 101 through the heating recovery tube 120 in a state in which the heating water is dropped in temperature.

In this case, the user sets a desired warm water temperature through a warm water temperature setting unit (not shown), and the controller adjusts a degree of openness of the warm water-side flow rate adjustment valve 240 so as to satisfy the desired warm water temperature which is set through the warm water temperature setting unit (S4).

As described above, when the degree of openness of the warm water-side flow rate adjustment valve 240 is adjusted, an amount of heat used to supply warm water is calculated (S5). The amount of heat used to supply warm water is calculated in the controller on the basis of the flow rate of the direct water, which is measured at the flow rate sensor 270, and a temperature difference (hereinafter, referred to as 'a warm water temperature difference') between the temperature of the direct water, which is measured at the direct water temperature sensor 250, and the temperature of the warm water, which is measured at the warm water temperature sensor 260.

As such, when the amount of heat used to supply warm water is calculated, an amount of heat to supply heating, which should be supplied to the places 102 that require heating so as to enable a concurrent usage of heating, is calculated (S6) .

The amount of heat to supply heating is an amount of heat that is obtained by subtracting the amount of heat used to supply warm water from an entire amount of supplied heat, and, when an entire supplied flow rate of heating water supplied to each household is predetermined and a flow rate to supply hot water, that is, a flow rate of the heating water, supplied to the hot water supply tube 130 is known, a remaining flow rate, which is obtained by subtracting the flow rate to supply hot water from the entire supplied flow rate, becomes a flow rate of supplied heating that should be supplied to the places 102 that require heating.

That is, the amount of heat used to supply warm water as calculated above may be determined to be equal to the amount of heat that is supplied from the heating water to the hot water heat exchanger 310 so that the flow rate to supply hot water is calculated on the basis of a difference between a temperature of heating water, which is measured at the heating supply temperature sensor 210, and a temperature of heating water, which is measured at the hot water-side recovery temperature sensor 220, and the flow rate of the supplied hot water is subtracted from the entire supplied flow rate, thereby obtaining the flow rate of supplied heating.

As described above, when the flow rate of supplied heating is calculated, the degree of openness of the heating-side flow rate adjustment valve 230 is adjusted to correspond to the flow rate of supplied heating and then the heating water is supplied to the places 102 that require heating such that a concurrent usage of the heating and the warm water may be possible (S7).

As described above, the present disclosure is not limited to the above described embodiments, and various modified implementations can be devised by those skilled in the art without departing from the scope of the appended claims.

## Claims

1. A device for supplying heating warm water for central heating and district heating, comprising:
a heat source supply unit (101) and places (102) that require heating;
a heating water supply tube (110) configured to supply heating water, which is supplied from said heat source supply unit (101), to said places (102) that require heating;
a heating recovery tube (120) configured to recover heating water, which is undergone heat exchange in the places (102) that require heating, to the heat source supply unit (101);
a hot water supply tube (130) branching off from the heating water supply tube (110) and configured to supply the heating water to a hot water heat exchanger (310);
a hot water recovery tube (140) configured to cause heating water, which is undergone heat exchange with direct water in the hot water heat exchanger (310), to flow to the heating recovery tube (120);
a direct water supply tube (150) into which the direct water flows;
a warm water supply tube (160) configured to supply a user with the direct water which is supplied through the direct water supply tube (150) and then is undergone heat exchange with the heating water, which is supplied through the hot water supply tube (130), in the hot water heat exchanger (310);
a heating-side flow rate adjustment valve (230) configured to adjust a flow rate of the heating water which is supplied to the places (102) that require heating through the heating water supply tube (110);
a warm water-side flow rate adjustment valve (240) configured to adjust a flow rate of the heating water which is supplied to the hot water heat exchanger (310) through the hot water supply tube (130);
a flow rate sensor (270) configured to sense a flow rate of the direct water;
a direct water temperature sensor (250) configured to measure a temperature of the direct water; and
a warm water temperature sensor (260) configured to measure a temperature of the warm water that is discharged through the warm water supply tube (160),
and
a controller configured to control a degree of openness of each of the heating-side flow rate adjustment valve (230) and the warm water-side flow rate adjustment valve (240) to supply the places (102) that require heating with an amount of heat to supply heating that is a remaining amount of heat obtained by subtracting an amount of heat used to supply warm water, which is used in heat exchange in the hot water heat exchanger (310), from an entire amount of supplied heat that is supplied through the heating water supply tube (110), when the warm water is used while heating is supplied, **characterized in that**
said controller is further configured to calculate the amount of heat used to supply warm water on the basis of the flow rate of the direct water, the temperature thereof, and the temperature of the warm water;
said controller is further configured to adjust the degree of openness of the heating-side flow rate adjustment valve (230) according to a set temperature of a heating temperature adjuster, which is set by a user, and when the warm water is used while the heating is supplied, to close the heating-side flow rate adjustment valve (230) and at the same time to open the warm water-side flow rate adjustment valve (240) when a flow of the direct water is detected by the flow rate sensor (270) configured to sense a flow rate of the direct water, thereby adjusting the degree of openness of the warm water-side flow rate adjustment valve (240) to correspond to a set temperature of the warm water, which is set by the user, and also adjusting the degree of openness of the heating-side flow rate adjustment valve (230) to enable the amount of heat used to supply heating to be supplied to the places (102) that require heating.

2. The device for supplying heating warm water of claim 1, further comprising:
a heating supply temperature sensor (210) configured to measure a temperature of the heating water that flows through the heating water supply tube (110); and
a hot water-side recovery temperature sensor (220) configured to measure a temperature of the heating water that flows through the hot water recovery tube (140),
wherein the controller sets a flow rate to supply hot water, which is supplied to the hot water heat exchanger (310), to a flow rate corresponding to the amount of heat used to supply warm water, and adjusts the degree of openness of the heating-side flow rate adjustment valve (230) to cause a remaining flow rate of supplied heating, which is obtained by subtracting the flow rate to supply hot water from an entire supplied flow rate corresponding to the entire amount of supplied heat, to be supplied to the places (102) that require heating when the warm water is used while the heating is supplied.

3. A control method of a device for supplying heating warm water for central heating and district heating according to claim 1 or 2, the method being **characterized by** comprising:
a) supplying heating in a state of opening the heating-side flow rate adjustment valve (230) configured to adjust a flow rate of heating water that is supplied to the places (102) that require heating through the heating water supply tube (110), and of closing the warm water-side flow rate adjustment valve (240) configured to adjust a flow rate of heating water that is supplied to the hot water heat exchanger (310) through the hot water supply tube (130);
b) determining whether a user demands warm water while the heating is supplied;
c) closing the heating-side flow rate adjustment valve (230) and opening the warm water-side flow rate adjustment valve (240) when the user demands the warm water, wherein a degree of openness of the warm water-side flow rate adjustment valve (240) is adjusted to satisfy a temperature of the warm water, which is set by the user;
d) calculating an amount of heat used to supply warm water, which is supplied from the hot water heat exchanger (310) to direct water, in a state in which the degree of openness of the warm water-side flow rate adjustment valve (240) is adjusted,
wherein the amount of heat used to supply warm water is calculated on the basis of a flow rate of the direct water, which is measured at the flow rate sensor (270), and a warm water temperature difference between a temperature of the direct water, which is measured at the direct water temperature sensor (250), and a temperature of the warm water, which is measured at the warm water temperature sensor (260); and
e) controlling a degree of openness of the heating-side flow rate adjustment valve (230) to supply the places (102) that require heating with a remaining amount of heat to supply heating, which is obtained by subtracting the amount of heat used to supply warm water from an entire amount of supplied heat that is supplied through the heating water supply tube (110),
f) adjusting the degree of openness of the heating-side flow rate adjustment valve (230) according to a set temperature of a heating temperature adjuster, which is set by a user, and
closing the heating-side flow rate adjustment valve (230) and opening the warm water-side flow rate adjustment valve (240) when a flow of the direct water is detected by a flow rate sensor (270) configured to sense a flow rate of the direct water, thereby adjusting the degree of openness of the warm water-side flow rate adjustment valve (240) to correspond to a set temperature of the warm water, which is set by the user.

4. The control method of claim 3, wherein the calculated amount of heat used to supply warm water is set to an amount of heat to supply hot water of the heating water that is supplied to the hot water heat exchanger (310) through the hot water supply tube (130), and
the remaining amount of heat to supply heating in Operation e) is an amount of heat obtained by subtracting the amount of heat to supply hot water from the entire amount of supplied heat.

5. The control method of claim 4, wherein a flow rate to supply hot water corresponding to the amount of heat to supply hot water is calculated on the basis of a temperature of the heating water, which is measured at a heating supply temperature sensor (210) that is provided at the heating water supply tube (110), a temperature of the heating water, which is measured at a hot water-side recovery temperature sensor (220) that is provided at a hot water recovery tube (140), and the amount of heat used to supply warm water, and
the degree of openness of the heating-side flow rate adjustment valve (230) is adjusted to supply the places (102) that require heating with a remaining flow rate of supplied heating, which is obtained by subtracting the flow rate to supply hot water from an entire supplied flow rate corresponding to the entire amount of supplied heat.

## Patentansprüche

1. Vorrichtung zur Lieferung von Heizungswarmwasser für Zentralheizung und Fernwärme, aufweisend:
eine Wärmequellen-Versorgungseinheit (101) und zu beheizende Orte (102);
ein Heizwasser-Zufuhrrohr (110), das so konfiguriert ist, dass es Heizwasser, das von der Wärmequellen-Versorgungseinheit (101) zugeführt wird, den zu beheizenden Orten (102) zuführt;
ein Wärmerückgewinnungsrohr (120), das so konfiguriert ist, dass es Heizwasser, das an den zu beheizenden Orten (102) einem Wärmeaustausch unterzogen wird, zu der Wärmequellen-Versorgungseinheit (101) zurückgewinnt;
ein Warmwasser-Zufuhrrohr (130), das von dem Heizwasser-Zufuhrrohr (110) abzweigt und so konfiguriert ist, dass es das Heizwasser einem Warmwasser-Wärmetauscher (310) zuführt;
ein Warmwasser-Rückgewinnungsrohr (140), das so konfiguriert ist, dass es bewirkt, dass Heizwasser, das im Warmwasser-Wärmetauscher (310) einem Wärmeaustausch mit Direktwasser unterzogen wird, zum Wärmerückgewinnungsrohr (120) fließt;
ein Direktwasser-Zufuhrrohr (150), in das das Direktwasser fließt;
ein Warmwasser-Zufuhrrohr (160), das so konfiguriert ist, dass es einen Benutzer mit dem Direktwasser versorgt, das durch das Direktwasser-Zufuhrrohr (150) zugeführt wird und dann in dem Warmwasser-Wärmetauscher (310) einem Wärmeaustausch mit dem Heizwasser unterzogen wird, das durch das Warmwasser-Zufuhrrohr (130) zugeführt wird;
ein heizungsseitiges Durchflussmengen-Einstellventil (230), das so konfiguriert ist, dass es eine Durchflussrate des Heizwassers, das den zu beheizenden Orten (102) durch das Heizwasser-Zufuhrrohr (110) zugeführt wird, einstellt;
ein warmwasserseitiges Durchflussmengen-Einstellventil (240), das so konfiguriert ist, dass es eine Durchflussrate des Heizwassers, das dem Warmwasser-Wärmetauscher (310) durch das Warmwasser-Zufuhrrohr (130) zugeführt wird, einstellt;
einen Durchflussmengen-Sensor (270), der so konfiguriert ist, dass er eine Durchflussrate des Direktwassers erfasst;
einen Direktwasser-Temperatursensor (250), der so konfiguriert ist, dass er eine Temperatur des Direktwassers misst; und
einen Warmwasser-Temperatursensor (260), der so konfiguriert ist, dass er die Temperatur des Warmwassers misst, das durch das Warmwasser-Zufuhrrohr (160) abgegeben wird,
und
einen Regler, der so konfiguriert ist, dass er einen Öffnungsgrad sowohl des heizungsseitigen Durchflussmengen-Einstellventils (230) als auch des warmwasserseitigen Durchflussmengen-Einstellventils (240) steuert, um die zu beheizenden Orte (102) mit einer Wärmemenge zu versorgen, um Wärme zuzuführen, die eine Restwärmemenge ist, die durch Subtrahieren einer Wärmemenge, die für die Zufuhr von Warmwasser verwendet wird, das beim Wärmeaustausch in dem Warmwasser-Wärmetauscher (310) verwendet wird, von einer Gesamtmenge an zugeführter Wärme erhalten wird, die durch das Heizwasser-Zufuhrrohr (110) zugeführt wird, wenn das Warmwasser verwendet wird, während die Heizwärme zugeführt wird, **dadurch gekennzeichnet, dass**
der Regler ferner so konfiguriert ist, dass er die Wärmemenge berechnet, die zur Lieferung von Warmwasser auf der Grundlage der Durchflussrate des Direktwassers, dessen Temperatur und der Temperatur des Warmwassers verwendet wird;
der Regler ferner so konfiguriert ist, dass er den Öffnungsgrad des heizungsseitigen Durchflussmengen-Einstellventils (230) gemäß einer eingestellten Temperatur eines Heiztemperatur-Einstellgeräts einstellt, die von einem Benutzer eingestellt wird, und, wenn das Warmwasser verwendet wird, während die Heizwärme zugeführt wird, das heizungsseitige Durchflussmengen-Einstellventil (230) schließt und gleichzeitig das warmwasserseitige Durchflussmengen-Einstellventil (240) öffnet, wenn eine Strömung des Direktwassers durch den Durchflussmengen-Sensor (270) erfasst wird, der so konfiguriert ist, dass er eine Durchflussrate des Direktwassers erfasst, wodurch der Öffnungsgrad des warmwasserseitigen Durchflussmengen-Einstellventils (240) so eingestellt wird, dass er einer vom Benutzer eingestellten Solltemperatur des Warmwassers entspricht, und auch der Öffnungsgrad des heizungsseitigen Durchflussmengen-Einstellventils (230) so eingestellt wird, dass die Wärmemenge, die zur Wärmeversorgung verwendet wird, den zu beheizenden Orten (102) zugeführt werden kann.

2. Vorrichtung zur Lieferung von Heizungswarmwasser nach Anspruch 1, ferner aufweisend:
einen Heizzufuhr-Temperaturfühler (210), der so konfiguriert ist, dass er eine Temperatur des Heizwassers misst, das durch das Heizwasser-Zufuhrrohr (110) fließt; und
ein warmwasserseitiger Rückgewinnungs-Temperaturfühler (220), der so konfiguriert ist, dass er eine Temperatur des Heizwassers misst, das durch das Warmwasser-Rückgewinnungsrohr (140) fließt,
wobei der Regler eine Durchflussrate zum Zuführen von Warmwasser, das dem Warmwasser-Wärmetauscher (310) zugeführt wird, auf eine Durchflussrate einstellt, die der Wärmemenge entspricht, die zum Zuführen von Warmwasser verwendet wird, und den Öffnungsgrad des heizungsseitigen Durchflussmengen-Einstellventils (230) einstellt, um zu bewirken, dass eine verbleibende Durchflussrate der zugeführten Heizwärme, die durch Subtrahieren der Durchflussrate zum Zuführen von Warmwasser von einer gesamten zugeführten Durchflussrate, die der gesamten zugeführten Wärmemenge entspricht, erhalten wird, den zu beheizenden Orten (102) zugeführt wird, wenn das Warmwasser verwendet wird, während die Heizwärme zugeführt wird.

3. Regelungsverfahren für eine Vorrichtung zur Lieferung von Heizungswarmwasser für Zentralheizung und Fernwärme nach Anspruch 1 oder 2, wobei das Verfahren **dadurch gekennzeichnet ist, dass** es aufweist:
a) Zuführen von Heizwärme in einem Zustand des Öffnens des heizungsseitigen Durchflussmengen-Einstellventils (230), das so konfiguriert ist, dass es eine Durchflussrate von Heizwasser einstellt, das den zu beheizenden Orten (102) durch ein Heizwasser-Zufuhrrohr (110) zugeführt wird, und des Schließens des warmwasserseitigen Durchflussmengen-Einstellventils (240), das so konfiguriert ist, dass es eine Durchflussrate von Heizwasser einstellt, das dem Warmwasser-Wärmetauscher (310) durch das Warmwasser-Zufuhrrohr (130) zugeführt wird;
b) Bestimmen, ob ein Benutzer Warmwasser anfordert, während die Heizwärme geliefert wird;
c) Schließen des heizungsseitigen Durchflussmengen-Einstellventils (230) und Öffnen des warmwasserseitigen Durchflussmengen-Einstellventils (240), wenn der Benutzer das Warmwasser anfordert, wobei ein Öffnungsgrad des warmwasserseitigen Durchflussmengen-Einstellventils (240) eingestellt wird, um einer Temperatur des Warmwassers zu genügen, die vom Benutzer eingestellt wird;
d) Berechnen einer Wärmemenge, die verwendet wird, um Warmwasser zu liefern, das von dem Warmwasser-Wärmetauscher (310) zu Direktwasser zugeführt wird, in einem Zustand, in dem der Öffnungsgrad des warmwasserseitigen Durchflussmengen-Einstellventils (240) eingestellt ist,
wobei die Wärmemenge, die verwendet wird, um Warmwasser zuzuführen, auf der Grundlage einer Durchflussrate des Direktwassers, die an dem Durchflussmengen-Sensor (270) gemessen wird, und einer Warmwassertemperaturdifferenz zwischen einer Temperatur des Direktwassers, die an dem Direktwasser-Temperatursensor (250) gemessen wird, und einer Temperatur des Warmwassers, die an dem Warmwasser-Temperatursensor (260) gemessen wird, berechnet wird; und
e) Regeln eines Öffnungsgrades des heizungsseitigen Durchflussmengen-Einstellventils (230), um die zu beheizenden Orte (102) mit einer Restwärmemenge zur Heizwärmeversorgung zu versorgen, die durch Subtrahieren der Wärmemenge, die zur Versorgung mit Warmwasser verwendet wird, von einer Gesamtmenge der zugeführten Wärme, die durch das Heizwasser-Zufuhrrohr (110) zugeführt wird, erhalten wird,
f) Einstellen des Öffnungsgrades des heizungsseitigen Durchflussmengen-Einstellventils (230) entsprechend einer von einem Benutzer eingestellten Solltemperatur eines Heizungstemperatur-Einstellgeräts, und
Schließen des heizungsseitigen Durchflussmengen-Einstellventils (230) und Öffnen des warmwasserseitigen Durchflussmengen-Einstellventils (240), wenn eine Strömung des Direktwassers von einem Durchflussmengen-Sensor (270) erfasst wird, der so konfiguriert ist, dass er eine Durchflussrate des Direktwassers erfasst, wodurch der Öffnungsgrad des warmwasserseitigen Durchflussmengen-Einstellventils (240) so eingestellt wird, dass er einer vom Benutzer eingestellten Temperatur des Warmwassers entspricht.

4. Regelungsverfahren nach Anspruch 3, bei dem die berechnete Wärmemenge, die zur Lieferung von Warmwasser verwendet wird, auf eine Wärmemenge zur Lieferung von Warmwasser des Heizwassers eingestellt wird, das dem Warmwasser-Wärmetauscher (310) durch das Warmwasser-Zufuhrrohr (130) zugeführt wird, und
die verbleibende Wärmemenge zur Heizwärmeversorgung in Schritt e) eine Wärmemenge ist, die durch Subtraktion der Wärmemenge zur Warmwasserlieferung von der gesamten gelieferten Wärmemenge erhalten wird.

5. Regelungsverfahren nach Anspruch 4, bei dem eine der Wärmemenge zur Bereitstellung von Warmwasser entsprechende Durchflussrate zur Bereitstellung von Warmwasser auf der Grundlage einer Temperatur des Heizwassers, die an einem Heizzufuhr-Temperatursensor (210) gemessen wird, der an dem Heizwasser-Zufuhrrohr (110) vorgesehen ist, einer Temperatur des Heizwassers, die an einem warmwasserseitigen Rückgewinnungs-Temperatursensor (220) gemessen wird, der an einem Warmwasser-Rückgewinnungsrohr (140) vorgesehen ist, und der Wärmemenge berechnet wird, die zur Bereitstellung von Warmwasser verwendet wird, und
der Öffnungsgrad des heizungsseitigen Durchflussmengen-Einstellventils (230) eingestellt wird, um die zu beheizenden Orte (102) mit einer verbleibenden Durchflussrate der zugeführten Heizwärme zu versorgen, die durch Subtraktion der Durchflussrate zur Warmwasserlieferung von einer gesamten zugeführten Durchflussrate, die der gesamten zugeführten Wärmemenge entspricht, erhalten wird.

## Revendications

1. Dispositif pour fournir de l'eau tiède de chauffage pour un chauffage central et un chauffage urbain, comprenant :
une unité de fourniture de source de chaleur (101) et des emplacements (102) qui nécessitent un chauffage ;
un tube de fourniture d'eau de chauffage (110) configuré pour fournir de l'eau de chauffage, qui est fournie à partir de ladite unité de fourniture de source de chaleur (101), auxdits emplacements (102) qui nécessitent un chauffage ;
un tube de récupération de chauffage (120) configuré pour récupérer de l'eau de chauffage, qui est soumise à un échange de chaleur dans les emplacements (102) qui nécessitent un chauffage, vers l'unité de fourniture de source de chaleur (101) ;
un tube de fourniture d'eau chaude (130) se ramifiant à partir du tube de fourniture d'eau de chauffage (110) et configuré pour fournir l'eau de chauffage à un échangeur thermique d'eau chaude (310) ;
un tube de récupération d'eau chaude (140) configuré pour amener de l'eau de chauffage, qui a subi un échange thermique avec de l'eau directe dans l'échangeur thermique d'eau chaude (310), à s'écouler vers le tube de récupération de chauffage (120) ;
un tube de fourniture d'eau directe (150) dans lequel s'écoule l'eau directe ;
un tube de fourniture d'eau tiède (160) configuré pour fournir à un utilisateur l'eau directe qui est fournie par le tube de fourniture d'eau directe (150) et est soumise ensuite un échange thermique avec l'eau de chauffage, qui est fournie via le tube de fourniture d'eau chaude (130), dans l'échangeur thermique d'eau chaude (310) ;
une vanne d'ajustement de débit d'écoulement côté chauffage (230) configurée pour ajuster un débit d'écoulement de l'eau de chauffage qui est fournie aux emplacements (102) qui nécessitent un chauffage, à travers le tube de fourniture d'eau de chauffage (110) ;
une vanne d'ajustement de débit d'écoulement côté eau tiède (240) configurée pour ajuster un débit d'écoulement de l'eau de chauffage qui est fournie à l'échangeur thermique d'eau chaude (310) via le tube de fourniture d'eau chaude (130) ;
un capteur de débit d'écoulement (270) configuré pour capter un débit d'écoulement de l'eau directe ;
un capteur de température d'eau directe (250) configuré pour mesurer une température de l'eau directe ; et
un capteur de température d'eau tiède (260) configuré pour mesurer une température de l'eau tiède qui est évacuée via le tube de fourniture d'eau tiède (160), et
un dispositif de commande configuré pour commander un degré d'ouverture de chacune de la vanne d'ajustement de débit d'écoulement côté chauffage (230) et de la vanne d'ajustement de débit d'écoulement côté eau tiède (240) pour fournir aux emplacements (102) qui nécessitent un chauffage une quantité de chaleur pour fournir un chauffage qui est une quantité de chaleur restante obtenue en soustrayant une quantité de chaleur utilisée pour fournir de l'eau tiède, qui est utilisée dans l'échange de chaleur dans l'échangeur thermique d'eau chaude (310), d'une quantité totale de chaleur fournie qui est fournie via le tube de fourniture d'eau de chauffage (110), lorsque l'eau tiède est utilisée pendant qu'un chauffage est fourni,
**caractérisé en ce que**
ledit dispositif de commande est en outre configuré pour calculer la quantité de chaleur utilisée pour fournir de l'eau tiède sur la base du débit d'écoulement de l'eau directe, de sa température et de la température de l'eau tiède ;
ledit dispositif de commande est en outre configuré pour ajuster le degré d'ouverture de la vanne d'ajustement de débit d'écoulement côté chauffage (230) en fonction d'une température réglée d'un dispositif de réglage de température de chauffage, qui est réglée par un utilisateur, et lorsque l'eau tiède est utilisée pendant qu'un chauffage est fourni, pour fermer la vanne d'ajustement de débit d'écoulement côté chauffage (230) et en même temps pour ouvrir la vanne d'ajustement de débit d'écoulement côté eau tiède (240) lorsqu'un écoulement de l'eau directe est capté par le capteur de débit d'écoulement (270) configuré pour capter un débit d'écoulement de l'eau directe, en ajustant ainsi le degré d'ouverture de la vanne d'ajustement de débit d'écoulement côté eau tiède (240) pour correspondre à une température réglée de l'eau tiède, qui est réglée par l'utilisateur, et ajuster également le degré d'ouverture de la vanne d'ajustement de débit d'écoulement côté chauffage (230) pour permettre à la quantité de chaleur utilisée pour fournir le chauffage d'être fournie aux emplacements (102) qui nécessitent un chauffage.

2. Dispositif de fourniture d'eau tiède de chauffage selon la revendication 1, comprenant en outre :
un capteur de température de fourniture de chauffage (210) configuré pour mesurer une température de l'eau de chauffage qui s'écoule à travers le tube de fourniture d'eau de chauffage (110) ; et
un capteur de température de récupération côté eau chaude (220) configuré pour mesurer une température de l'eau de chauffage qui s'écoule via le tube de récupération d'eau chaude (140),
dans lequel le dispositif de commande règle un débit d'écoulement pour fournir de l'eau chaude, qui est fournie à l'échangeur thermique d'eau chaude (310), à un débit d'écoulement correspondant à la quantité de chaleur utilisée pour fournir de l'eau tiède, et ajuste le degré d'ouverture de la vanne d'ajustement de débit d'écoulement côté chauffage (230) pour amener un débit d'écoulement restant de chauffage fourni, qui est obtenu en soustrayant le débit d'écoulement pour fournir de l'eau chaude d'un débit d'écoulement fourni complet correspondant à la quantité totale de chaleur fournie, à fournir aux emplacements (102) qui nécessitent un chauffage lorsque l'eau tiède est utilisée pendant que le chauffage est fourni.

3. Procédé de commande d'un dispositif de fourniture d'eau tiède de chauffage pour un chauffage central et un chauffage urbain selon la revendication 1 ou 2, le procédé étant **caractérisé en ce qu'**il comprend les étapes consistant à :
a) fournir un chauffage dans un état d'ouverture de la vanne d'ajustement de débit d'écoulement côté chauffage (230) configurée pour ajuster un débit d'écoulement d'eau de chauffage qui est fournie aux emplacements (102) qui nécessitent un chauffage via le tube de fourniture d'eau de chauffage (110), et de fermeture de la vanne d'ajustement de débit d'écoulement côté eau tiède (240) configurée pour ajuster un débit d'écoulement d'eau de chauffage qui est fournie à l'échangeur thermique d'eau chaude (310) via le tube de fourniture d'eau chaude (130) ;
b) déterminer si un utilisateur demande de l'eau tiède ou non pendant que le chauffage est fourni ;
c) fermer la vanne d'ajustement de débit d'écoulement côté chauffage (230) et ouvrir la vanne d'ajustement de débit d'écoulement côté eau chaude (240) lorsque l'utilisateur demande l'eau tiède, dans lequel un degré d'ouverture de la vanne d'ajustement de débit d'écoulement côté eau tiède (240) est ajusté pour satisfaire une température de l'eau tiède, qui est réglée par l'utilisateur ;
d) calculer une quantité de chaleur utilisée pour fournir de l'eau tiède, qui est fournie à partir de l'échangeur thermique d'eau chaude (310) vers l'eau directe, dans un état dans lequel le degré d'ouverture de la vanne d'ajustement de débit d'écoulement côté eau chaude (240) est ajusté,
dans lequel la quantité de chaleur utilisée pour fournir de l'eau tiède est calculée sur la base d'un débit d'écoulement de l'eau directe, qui est mesuré au niveau du capteur de débit d'écoulement (270), et
une différence de température d'eau tiède entre une température de l'eau directe, qui est mesurée au niveau du capteur de température d'eau directe (250), et une température de l'eau tiède, qui est mesurée au niveau du capteur de température d'eau tiède (260) ; et
e) commander un degré d'ouverture de la vanne d'ajustement de débit d'écoulement côté chauffage (230) pour fournir aux emplacements (102) qui nécessitent un chauffage une quantité de chaleur restante pour fournir un chauffage, qui est obtenue en soustrayant la quantité de chaleur utilisée pour fournir de l'eau tiède d'une quantité totale de chaleur fournie qui est fournie à travers le tube de fourniture d'eau de chauffage (110),
f) régler le degré d'ouverture de la vanne d'ajustement de débit d'écoulement côté chauffage (230) en fonction d'une température réglée d'un dispositif d'ajustement de température de chauffage, qui est réglée par un utilisateur, et
fermer la vanne d'ajustement de débit d'écoulement côté chauffage (230) et ouvrir la vanne d'ajustement de débit d'écoulement côté eau tiède (240) lorsqu'un écoulement de l'eau directe est capté par un capteur de débit d'écoulement (270) configuré pour capter un débit d'écoulement de l'eau directe, en ajustant ainsi le degré d'ouverture de la vanne d'ajustement de débit d'écoulement côté eau tiède (240) pour correspondre à une température réglée de l'eau tiède, qui est définie par l'utilisateur.

4. Procédé de commande selon la revendication 3, dans lequel la quantité calculée de chaleur utilisée pour fournir de l'eau tiède est réglée à une quantité de chaleur pour fournir de l'eau chaude de l'eau de chauffage qui est fournie à l'échangeur thermique d'eau chaude (310) via le tube de fourniture d'eau chaude (130), et
la quantité de chaleur restante pour fournir du chauffage lors de l'opération e) est une quantité de chaleur obtenue en soustrayant la quantité de chaleur pour fournir de l'eau chaude de la quantité totale de chaleur fournie.

5. Procédé de commande selon la revendication 4, dans lequel un débit d'écoulement pour fournir de l'eau chaude correspondant à la quantité de chaleur pour fournir de l'eau chaude est calculé sur la base d'une température de l'eau de chauffage, qui est mesurée au niveau d'un capteur de température de fourniture de chauffage (210) qui est prévu au niveau du tube de fourniture d'eau de chauffage (110), d'une température de l'eau de chauffage, qui est mesurée au niveau d'un capteur de température de récupération côté eau chaude (220) qui est prévu au niveau d'un tube de récupération d'eau chaude (140), et de la quantité de chaleur utilisée pour fournir de l'eau tiède, et
le degré d'ouverture de la vanne d'ajustement de débit d'écoulement côté chauffage (230) est ajusté pour fournir aux emplacements (102) qui nécessitent un chauffage, avec un débit d'écoulement restant de chauffage fourni, qui est obtenu en soustrayant le débit d'écoulement de fourniture d'eau chaude d'un débit d'écoulement fourni complet correspondant à la quantité totale de chaleur fournie.
